# EUROPÄISCHE PATENTSCHRIFT

(11) **EP 0 591 812 B1**
(45) Veröffentlichungstag und Bekanntmachung des Hinweises auf die Patenterteilung: **19.03.1997**
(21) Anmeldenummer: 93115588.1
(22) Anmeldetag: 27.09.1993
(51) Int. Cl.: C04B 35/00, D01F 9/08

(54) **Polykristalline Fasern aus Aluminiumoxid oder aus Aluminiumoxid haltigen Mehrkomponentenoxiden und Verfahren zu deren Herstellung**
Polycrystalline fibres consisting of alumina or an alumina-containing multicomponent oxide, and process for its production
Fibres polycristallines en alumine ou à base de plusieurs oxides dont l'alumine et procédé pour leur production

(30) Priorität: 05.10.1992 DE 4233477
(43) Veröffentlichungstag der Anmeldung: 13.04.1994
(73) Patentinhaber: FRAUNHOFER-GESELLSCHAFT ZUR FÖRDERUNG DER ANGEWANDTEN FORSCHUNG E.V., 80636 München (DE)
(72) Erfinder: Glaubitt, Walther, Dipl.-Ing., D-97209 Veitshöchheim (DE); Jahn, Rainer, Dipl.-Ing., D-97080 Würzburg (DE)

(56) Entgegenhaltungen:
- US-A- 4 101 615
- US-A- 4 296 057
- US-A- 5 133 918
- DATABASE WPI Week 8951, Derwent Publications Ltd., London, GB; AN 89-373413 & JP-A-1 278 414 (COLLOID RESEARCH KK) 8. November 1989
- Dictionary of Ceramic Science and Engineering, Ian J. McColm, 2nd Edition, Plenum Press, page 287 (1994)

## Beschreibung

Die Erfindung betrifft ein Verfahren zur Herstellung von polykristallinen Fasern aus Aluminiumoxid oder aus Aluminiumoxid haltigen Mehrkomponentenoxiden über ein Sol-Gel-Verfahren sowie als Zwischenprodukt eine viskose, zur Herstellung von Gelfäden oder -fasern geeignete, aluminiumhaltige Flüssigkeit. Dabei werden aus der erfindungsgemäßen Flüssigkeit (Lösung) zunächst spinnbare Gelfäden oder -fasern erzeugt, die Precursor der polykristallinen α-Al₂O₃-Fasern oder entsprechender Fasern aus Mehrkomponentenoxiden sind.

Auf Grund ihrer hohen Festigkeit und ihres hohen E-Moduls eignen sich Fasern hervorragend zur Herstellung hochbeanspruchbarer Faserverbundwerkstoffe. Dazu werden Fasern als Endlosfasern, als Langstapelfasern (einige cm bis m) oder als Kurzfasern (bis zu einigen mm) verwendet, wobei der jeweilige Einsatzbereich von den Eigenschaften der Fasern abhängt, wie z.B. von der Faserlänge, der Zahl der Fehlstellen, der Zugfestigkeit und den Spinneigenschaften.

Oxidische, anorganische Fasern können z.B. Anwendung finden zur Verbesserung der mechanischen Eigenschaften von Bauteilen, zur Hochtemperaturwärmedämmung (Asbest-Ersatz), als Katalysatorträger oder zur Heißgasfiltration (Rußfilter).

Die Herstellung von anorganischen, hochtemperaturbeständigen oxidischen Fäden und Fasern, mit Ausnahme von Whiskern, erfolgt z.B. aus oxidischen Schmelzen unter Anwendung hoher Temperaturen. Dies hat zum einen den Nachteil, daß aufgrund der hohen Temperaturen große Anforderungen an die Materialien der Produktionsvorrichtungen gestellt werden und zum anderen die geschmolzenen Oxide bestimmte Viskositäten sowie ein nicht zu enges Erweichungsintervall besitzen müssen, damit das Ziehen von Fäden und Fasern ermöglicht wird. Diese Schmelzen enthalten daher immer SiO₂ in verschiedenen Mengen. Fasern aus z.B. reinem Al₂O₃ sind deshalb auf diese Weise nicht herstellbar.

Es sind auch Verfahren bekannt, bei denen anorganische Fasern dadurch hergestellt werden, daß man spinnbare Salz- oder Sollösungen durch ein Trockenspinnverfahren zu Salz- oder Gelfasern verspinnt und anschließend diese Fasern durch eine thermische Behandlung bei höherer Temperatur in die gewünschten anorganischen Fasern überführt. Z.B. sind solche Verfahren beschrieben in der DE-AS 1249832, DE-OS 1494552 oder DE-OS 2054573.

Anorganische Salz- oder Sollösungen können aber nur in ganz speziellen Fällen versponnen werden, weil die verwendeten Lösungen nur ein ungenügendes Fadenziehvermögen aufweisen. Über ein Trockenspinnverfahren werden Gelfasern erhalten, die in Normalatmosphäre geglüht zu polykristallinen Fasern sintern. Die resultierenden unbefriedigenden Faserqualitäten verhindern jedoch eine breitere technische Nutzung des Verfahrens (Ullmanns Enzyklopädie der techn. Chemie, 1976, 11, 381-381).

Entwicklung und Herstellung von Al₂O₃-Fasern waren in den letzten zwei Jahrzehnten Gegenstand zahlreicher Forschungsaktivitäten (H.G. Sowman, D.D. Johnson, Oxid fibres from chemical processes, in: Fiber Reinforced Ceramic Composites, Ed. K.S. Mazdiyasni, Noyes Publications, Park Ridge, NJ, 1990, 123-140; J.D. Birchall, The preparation and properties of polycrystalline aluminium oxide fibres, Trans. J. Br. Ceram. Soc. 82, 1983, 143-149; H.G. Sowman, D.D.Johnson, Ceramic oxide fibres, Cer. Eng. Sci. Proc. 6, 1985, 1221; G. Winter, Polykristalline anorganische Faserherstellung, Angew. Chem. 84, 1972, 866). Aus diesen Arbeiten sind drei verschiedene Herstellungsverfahren entwickelt worden, nach denen heute Al₂O₃-Fasern gefertigt werden. Es sind dies:

### 1. Verspinnen von Salzlösungen

Eine viskose, wäßrige Lösung aus reinem Aluminiumsalz und einem organischen Polymer wird zu Fäden versponnen und gesintert (DE 3447670 C2) .

### 2. Extrusion von Suspensionen

Durch Extrusion einer hochviskosen, wässrigen Al₂O₃-Suspension (Partikeldurchmesser < 0.5 µm) werden Fäden erhalten.

### 3. Precursor-Methode (Sol-Gel-Prozess)

Aus einem anorganischen oder anorganisch/organischen Polymer-Precursor werden durch Schmelz- oder Trockenspinnen Gelfasern hergestellt.

Die spinnfähigen Sole werden durch Verwendung von Aluminiumalkoholaten, von Alkylaluminiumverbindungen, von carboxylierten Aluminiumverbindungen, von Aluminiumacetylacetonaten und Triethanolamin-modifizierten Aluminiumalkoholaten in bestimmten Kombinationen erhalten. Zur Verbesserung der Spinnfähigkeit können hochpolymere Reagenzien (Spinnhilfsmittel) wie Polyethylenoxid zugegeben werden. So wird z.B. Al(OBu^{s})₃ mit Triethanolamin umgesetzt (JP 01278414 A2; Preparation of alumina fiber from aluminium alkoxide, Colloid Research Institut, Japan). Durch den Einsatz des trifunktionellen Amins können größere molekulare Einheiten gebildet werden, die hydrolysiert und kondensiert zu einer Spinnmasse reagieren.

Zur Carboxylierung werden beispielsweise Oxalsäure (Verfahren zur Herstellung von Al₂O₃-Filamentgarn, Zwischenbericht des BMFT Förderprojektes 03 M 104 O A 4, AKZO-Chemie, Research Laboratories Obernburg, 1991) oder Citronensäure (Nishio, Toshiyuki; Fujiki, Yoshinori; Preparation of ceramic fibers by a precursor method, Part 1, Alumina fiber, Nippon Seramikkusu kyokai Gakujutsu Ronbunshi, 98 (11), 1223-30, 1990) verwendet.

Höhermolekulare Monocarbonsäuren, z.B. Stearinsäure, werden zur partiellen Komplexierung von Alkylaluminiumverbindungen eingesetzt (DE-OS 2408122). Als Lösungsmittel finden je nach Verfahrensvariante Dioxan, Toluol, Benzol u.a. Verwendung, was nach heutiger Gewichtung des Umweltschutzes als problematisch anzusehen ist.

Des weiteren ist aus der DE-OS 2325575 ein Verfahren zur Herstellung von Fasern auf Aluminiumoxidbasis nach dem Trockenspinnverfahren bekannt, bei dem die Salz- oder Gelfasern vor der Temperaturbehandlung mit einer Lösung oder Dispersion von Polyvinylacetat und gegebenenfalls einem Weichmacher in Kontakt gebracht werden.

Ferner sind aus der DE-OS 2127418 viskose, metallorganische Lösungen bekannt, die sich zur Herstellung von anorganischen, oxidischen, hochtemperaturbeständigen Fäden und Fasern eignen sollen, und in der DE 2732290 C2 wird ein Verfahren zur Herstellung von polykristallinen Oxidfasern vorgestellt.

All diese Verfahren haben jedoch den Nachteil, daß sie teuer, aufwendig oder mit den Anforderungen des modernen Umweltschutzes nicht vereinbar sind, und/oder daß sie Fasern mit unbefriedigender Qualität liefern. Anforderungen, die die Fasern erfüllen müssen, sind z.B. große Faserlängen, eine geringe Zahl von Fehlstellen, hohe Zugfestigkeiten und gute Spinneigenschaften.

Aus der US 5,133,918 ist ein Herstellungverfahren für polykristalline Aluminiumoxid-Kurzfasern nach einem Schleuderverfahren bekannt. Dabei wird zunächst eine alkoholische Lösung eines Aluminiumalkoxids bereitet und diese mit Acetylaceton versetzt. Das erhaltene Produkt wird mittels Wasser hydrolysiert und mittels einer starken Base polymerisiert, das resultierende Sol wird getrocknet und gesponnen. Das hier beschriebene Sol-Gel-Verfahren ist nur zur Herstellung von Kurzfasern geeignet, zur Herstellung von Langfasern oder gar von Endlosfasern ist es dagegen völlig unbrauchbar.

Aufgabe der vorliegenden Erfindung war es deshalb, ein Verfahren bereit zu stellen, mit dem anorganische, oxidische, polykristalline und hochtemperaturbeständige Fasern oder Fäden auf Aluminiumoxid-Basis, d.h. aus Aluminiumoxid oder aus Aluminiumoxid haltigen Mehrkomponentenoxiden gefertigt werden können, die über große Faserlängen (Langfasern), eine geringe Zahl von Fehlstellen, hohe Zugfestigkeiten und gute Spinneigenschaften verfügen.Dieses Verfahren soll einfach und universell anzuwenden und kostengünstig in der Durchführung sein.

Aufgabe der vorliegenden Erfindung war es auch, auf einfache und kostengünstige Weise eine universell einsetzbare Sollösung bereit zu stellen, die über ein hohes Fadenziehvermögen verfügt, die zur Herstellung spinnbarer Gelfasern geeignet ist, die lagerstabil ist und die deshalb als lagerstabiles Zwischenprodukt zur Herstellung von Fasern oder Fäden aus Aluminiumoxid bzw. aus Aluminiumoxid haltigen Mehrkomponentenoxiden angesehen werden kann, wobei die Gelfasern als Precursor für die Herstellung der vorgennanten Fasern dienen sollen.

Gelöst wird diese Aufgabe dadurch, daß man aus einer viskosen Flüssigkeit Gelfäden zieht, diese trocknet und sintert, wobei die viskose Flüssigkeit eine oder mehrere partiell oder vollständig hydrolytisch kondensierte Verbindungen des Aluminiums und gegebenenfalls anderer Elemente aus der Gruppe Ca, Mg, B, Si, der Übergangsmetalle, der Lanthaniden und der Actiniden, und/oder von den oben genannten Verbindungen abgeleiteten Vorkondensaten enthält, wobei die hydrolytische Kondensation gegebenenfalls in Anwesenheit eines Katalysators und/oder eines Lösungsmittels durch Einwirken von Wasser oder Feuchtigkeit durchgeführt wird, und wobei sich die partiell oder vollständig hydrolytisch kondensierten Verbindungen des Aluminiums von Aluminiumalkoholaten der Formel I

Al(OR*)₃ (I)

in der die Reste R* gleich oder verschieden sind und Propyl oder Butyl bedeuten,
und/oder von aus Aluminiumverbindungen in situ entstandenen Aluminiumalkoholaten der Formel I ableiten
- durch Umsetzung des Al(OR*)₃ mit 0.5 bis 2.5 Mol, bezogen auf 1 Mol Al(OR*)₃, eines Alkohols oder einer Mischung von Alkoholen der Formel II oder III,

   R¹-X-R²-OH (II)

   R¹-CX-R²-OH (III)

   in der R¹ einen geradkettigen, verzweigten oder cyclischen Alkyl-Rest mit 1 bis 10 C-Atomen bedeutet, R² einen Alkylen-Rest mit 2 bis 4 C-Atomen darstellt, und X gleich O, S oder NR³ ist, mit R³ gleich Wasserstoff oder Alkyl mit 1 bis 4 C-Atomen,
- durch Komplexierung der resultierenden Aluminiumverbindungen mit 3 bis 7 Mol, bezogen auf ein Mol Al(OR*)₃, einer niedermolekularen Carbonsäure mit 1 bis 8 Kohlenstoffatomen, einer Mischung aus niedermolekularen Carbonsäuren, oder der entsprechenden Anhydride,
- und durch hydrolytische Kondensation der komplexierten Aluminiumverbindungen.

Die Aufgabe des Bereitstellens einer geeigneten, lagerstabilen Sollösung wird durch viskose Flüssigkeiten gelöst, die aus einer oder mehreren partiell oder vollständig hydrolytisch kondensierten Verbindungen des Aluminiums und gegebenenfalls anderer Elemente aus der Gruppe Ca, Mg, B, Si, der Übergangsmetalle, der Lanthaniden und der Actiniden, und/oder von den oben genannten Verbindungen abgeleiteten Vorkondensaten bestehen, wobei die hydrolytische Kondensation gegebenenfalls in Anwesenheit eines Katalysators und/oder eines Lösungsmittels durch Einwirken von Wasser, von Feuchtigkeit oder von durch eine Veresterung gebildetes Wasser durchgeführt wurde. Diese viskose Lösung ist dadurch gekennzeichnet, daß sie partiell oder vollständig hydrolytisch kondensierte Verbindungen des Aluminiums enthält, die sich von Aluminiumalkoholaten der Formel I

Al(OR*)³ (I)

in der die Reste R* gleich oder verschieden sind und Propyl, Ethyl oder Butyl bedeuten,
und/oder von aus Aluminiumverbindungen in situ entstandenen Aluminiumalkoholaten der Formel I dadurch ableiten,
daß das Al(OR*)₃ mit 0.5 bis 2.5 Mol, bezogen auf 1 Mol Al(OR*)₃, eines Alkohols oder einer Mischung von Alkoholen der Formel II oder III umgesetzt wird,

R¹-X-R²-OH (II)

R¹-CX-R²-OH (III)

in der R¹ einen geradkettigen, verzweigten oder cyclischen Alkyl-Rest mit 1 bis 10 C-Atomen bedeutet, R² einen Alkylen-Rest mit 2 bis 4 C-Atomen darstellt, und X gleich O, S oder NR³ ist, mit R³ gleich Wasserstoff oder Alkyl mit 1 bis 4 C-Atomen,
daß die daraus resultierenden Aluminiumverbindungen mit 3 bis 7 Mol, bezogen auf ein Mol Al(OR*)₃, einer niedermolekularen Carbonsäure einer Mischung aus niedermolekularen Carbonsäuren, oder der entsprechenden Anhydride komplexiert(carboxyliert) und die komplexierten Aluminiumverbindungen hydrolytisch kondensiert werden.

Überraschenderweise wurde festgestellt, daß Aluminiumverbindungen der Formel I nach Zugabe von niedermolekularen Carbonsäuren nicht vergelen, wenn sie zuvor mit Alkoholen der Formel II oder III umgesetzt wurden. Nach Zugabe von Wasser und nach hydrolytischer Kondensation wurden überraschenderweise spinnfähige Oligomerlösungen erhalten, aus denen spinnbare Gelfasern, in einigen Fällen sogar Endlosfasern, mit den gewünschten Eigenschaften gewonnen werden können.

Überraschenderweise wurde festgestellt, daß durch die Umsetzung von Al-Verbindungen der Formel I mit Alkoholen der Formel II und III Al-Verbindungen entstehen, die sich problemlos carboxylieren, hydrolysieren und kondensieren lassen.

Die direkte Umsetzung von Aluminium-Verbindungen der Formel I, z.B. von Al(OBu^{s})₃, mit Carbonsäuren führt dagegen zu festen, unlöslichen Gelen, die kein Faserbildungsvermögen aufweisen. Auch durch den Zusatz von geeigneten Lösungsmitteln kann die Bildung schwerlöslicher Aluminium-Verbindungen nicht unterbunden werden. Lösungsmittel wie unverzweigte niedrige Alkohole oder Ketone reagieren bereits ohne Zugabe einer Carbonsäure mit Aluminium-Verbindungen der Formel I zu Niederschlägen. Isopropanol, Dioxan, Tetrahydrofuran, Essigester, Chloroform, Toluol oder Triisobutylamin lassen sich zwar dagegen problemlos zumischen, verhinderten aber während der Säurezugabe auch nicht die Ausbildung fester Aluminium-Verbindungen.

Es wird angenommen, daß bei der Herstellung der erfindungsgemäßen Fasern oder Fäden bzw. der erfindungsgemäßen Spinnmasse eine der drei reaktionskinetisch ähnlichen und sterisch anspruchslosen Alkoholat-Gruppen in der Verbindung Al(OR*)₃ (I) durch eine reaktionskinetisch verschiedene und sterisch anspruchsvollere Alkoxy-Gruppe des Typs R¹-X-R²-O- (Formel II) bzw. R¹-CX-R²-O- (Formel III) ersetzt wird, und daß die niedermolekulare Carbonsäure die resultierende Aluminiumverbindung des Typs Al(OR*)₂(O-R²-X-R¹) bzw. Al(OR*)₂(O-R²-CX-R¹) komplexiert.

Dies ist überraschend und entspricht nicht den Erwartungen, denn bei analogen Silicium-Verbindungen funktioniert dieser Austausch nicht. i-PrOEtOH und n-BuOEtOH z.B. werden hier sogar als Lösungsmittel eingesetzt.

Ferner wird aufgrund von experimentellen Befunden angenommen, daß nach der Carboxylierung nur noch 6-fach koordiniertes Aluminium vorliegt, und daß nicht alle Alkoxy-Gruppen des Aluminums durch Carboxylat-Gruppen verdrängt werden. Anderenfalls würde man schwerlösliches Aluminiumcarboxylat erhalten, das keine Faserzieheigenschaften mehr aufweist. Auch dies ist überraschend und entspricht nicht den Erwartungen.

Des weiteren lassen experimentelle Befunde (IR-spektroskopische Untersuchen, ²⁷Al-NMR) den Schluß zu, daß die Carboxylat-Gruppen nicht hydrolysiert werden, daß nach der Hydrolyse das Aluminium nur noch 4-fach koordiniert ist, und daß Carboxylat-Gruppen sowohl verbrückend als auch chelatisierend mit den Aluminiumatomen verknüpft sind. Auch dieses Ergebnis ist überraschend, da in der Literatur nur chelatisierende Aluminiumcarboxylat-Gruppen bekannt sind.

Entscheidend für die Entstehung eines spinnfähigen Sols scheint demnach die richtige Abstufung der chemischen Reaktivitäten der Substituenten am Al-Zentralatom zu sein. Dies könnte, neben sterischen Effekten, der Grund dafür sein, daß durch die verschieden schnell reagierenden Abgangsgruppen eine Verbindung erhalten wird, die sich nacheinander problemlos carboxylieren, hydrolysieren und kondensieren läßt.

Ein weiterer großer Vorteil der Erfindung besteht darin, daß die Herstellung der Spinnmasse in einer Eintopfreaktion erfolgt. Aluminiumsekundärbutylat z.B. ist eine kommerziell leicht verfügbare, flüssige Verbindung, die ohne weiteren Lösungsmittelzusatz bei Raumluft verarbeitet werden kann.

Ein weiterer Vorteil der Erfindung besteht darin, daß problematische Lösungsmittelzusätze wie Dioxan, Toluol etc. nicht benötigt werden. Ferner erfolgt die zur Faserherstellung erforderliche chemische Modifikation ohne Zusatz eines Katalysators bei Raumtemperatur und unter einfachem Rühren.

Ebenso einfach ist die Carboxylierung. Die betreffende Carbonsäure wird dem Ansatz unter bloßem Rühren bei Raumtemperatur langsam zugegeben, und das zur Hydrolyse notwendige Wasser kann in chemisch ungebundener Form, z.B. dampfförmig, bei Raumtemperatur eingeleitet werden, ohne daß es zu Präzipitationen kommt. Es resultiert eine wasserklare, farblose, kulardisperse Spinnmasse, die ohne Spinnhilfsmittel zu Endlos-Gelfäden versponnen werden kann.

Die Gelfäden weisen wegen der Verwendung niedermolekularer Carbonsäuren einen hohen theoretischen Al₂O₃-Gehalt von bis zu 34 % auf. D.h. die Spinnmasse enthält einen niedrigen organischen Anteil, sodaß bei der Thermolyse der Gelfäden (zu den oxidischen Fasern) der Schrumpf verringert wird.

Des weiteren ist die Spinnmasse in den bevorzugten Ausführungsformen nicht toxisch und kann bei Raumtemperatur über ein Jahr lang gelagert werden, ohne zu präzipitieren. Die Phasenumwandlung zu α-Al₂O₃ tritt bei einer Temperatur von ca. 1125 °C ein, und es werden Fasern mit einem Durchmesser von ≤ 20 µm enthalten. Gelfäden zur Gewinnung von Fasern aus Mehrkomponentenoxiden sind durch einfachen stöchiometrischen Zusatz entsprechender Metallalkoholate erhältlich.

Die Reste R* der Formel I sind Alkyl-Gruppen mit drei oder vier Kohlenstoff-Atomen, wobei die s-Butyl- oder i-Butyl-Gruppe bevorzugt ist und besonders gute Resultate liefert.

Bevorzugte Ausführungsformen der Alkohole der Formel II bzw. III sind i-C₃H₇-O-C₂H₄-OH, n-C₄H₉-O-C₂H₄-OH, C₂H₅-NH-C₂H₄-OH, C₂H₅-S-C₂H₄-OH, CH₃-CO-CH₂-OH, CH₃-CO-CH(CH₃)-OH oder C₂H₅-CO-CH₂-OH, wobei besonders gute Ergebnisse n-C₄H₉-O-C₂H₄-OH und i-C₃H₇-O-C₂H₄-OH liefern.

Die niedermolekularen Carbonsäuren zur Komplexierung der Verbindungen "Al(OR*)₂(O-R²-X-R¹)" bzw. "Al(OR*)₂(O-R²-CX-R¹)" werden in Mengen zwischen 3 und 7 Mol, bezogen auf ein Mol Al(OR*)₃, zugegeben, wobei eine Menge von 5 Mol bevorzugt ist und besonders gute Resultate ergibt.

Als niedermolekulare Carbonsäuren zur Komplexierung der Verbindungen "Al(OR*)₂(O-R²-X-R¹)" bzw. "Al(OR*)₂(O-R²-CX-R¹)" sind Carbonsäuren mit 1 bis 8 Kohlenstoff-Atomen geeignet. Bevorzugt sind Propion-, Valerian-, Capron- oder Caprylsäure, oder ein Gemisch derselben. Essigsäure alleine ist weniger brauchbar, in Mischungen mit anderen Säuren ist jedoch auch sie sehr gut geeignet. Ganz besonders gute Ergebnisse werden mit Propionsäure oder einer Mischung aus Capron- und Propionsäure erhalten. Des weiteren können die Carbonsäuren auch in Form ihrer Anhydride zugegeben werden.

Die Carbonsäuren dienen nicht nur als carboxylierendes Agens, sondern sie fungieren auch als polare Lösungsmittel.

Die hydrolytische Kondensation der Al-haltigen Lösung wird durch Einwirken von Wasser oder Feuchtigkeit durch geführt, gegebenenfalls unter Zugabe eines Katalysators und/oder von Lösungsmittel.

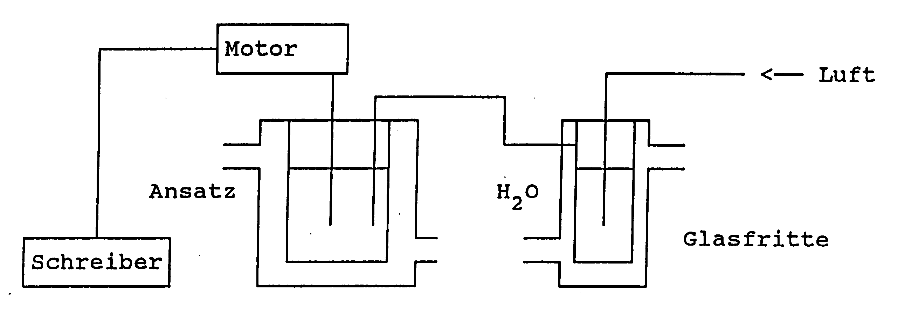

Zur kontrollierten Hydrolyse kann z.B. eine Apparatur verwendet werden, die feuchte Luft mit eingestellten Wasserdampfpartialdruck in die Spinnmasse leitet. Das Einsetzen und weitere Fortschreiten der Kondensationsreaktion macht sich durch einen Viskositätsanstieg im Sol bemerkbar und wird bei konstanter Rührgeschwindigkeit am entsprechenden Drehmomentanstieg des Rührwerks beobachtet. In Abbildung 1 ist diese Apparatur zur Herstellung der erfindungsgemäßen Spinnmasse über das Sol-Gel-Verfahren schematisch dargestellt.

Ein spinnbares Sol wird nach einer Reaktionszeit von drei bis vier Tagen erzielt, wobei die Viskosität stetig zunimmt und einen Grenzwert von ca. 2000 Pas erreicht. Die erfindungsgemäßen Sole zeigen Spinnbarkeit, wenn sich ihre Viskosität diesem Grenzwert nähert, und sie weisen im Schersprungversuch ausgeprägtes strukturviskoses Verhalten auf, das auf anisotrope, gestreckte, oligomere Struktureinheiten hinweist.

Die Einstellung einer dem entsprechenden Anwendungsfall angepaßten Viskosität kann gegebenenfalls auch durch die Zugabe eines inerten Lösungsmittel erfolgen.

Durch Zusatz geeigneter Heteroalkoholate in entsprechenden Konzentrationen lassen sich nach dem erfindungsgemäßen Verfahren auch Spinnmassen zur Gewinnung von Fasern aus ponentenoxiden, z.B. aus reinem Mullit oder aus Spinell, zeugen.

So können der erfindungsgemäßen, Al-haltigen Lösung vor der hydrolytischen Kondensation eine oder mehrere hydrolytisch kondensierbare Verbindungen, gegebenenfalls in vorkondensierter Form, zugegeben werden, wie z.B. Silicium-Verbindungen der Formel IV,

Rₐ(R''Z)_{b}SiX_{4-(a+b)} (IV)

in der die Reste R, R'' und Z gleich oder verschieden sind und folgende Bedeutung haben:
- R =: Alkyl, Alkenyl, Aryl, Alkylaryl oder Arylalkyl,
- R" =: Alkylen oder Alkenylen, wobei diese Reste durch Sauerstoff- oder Schwefelatome oder -NH-Gruppen unterbrochen sein können,
- X =: Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
- Z =: Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinyl-Gruppe,
- a =: 0, 1, 2, oder 3,
- b =: 0, 1, 2, oder 3, mit a+b = 1,2 oder 3.

Solche Silane sind z.B. in der DE 34 07 087 C2 beschrieben. Die Alkyl-Reste sind z.B. geradkettige, verzweigte oder cyclische Reste mit 1 bis 20, vorzugsweise mit 1 bis 10 Kohlenstoff-Atomen, und besonders bevorzugt sind niedere Alkyl-Reste mit 1 bis 6 Kohlenstoff-Atomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenyl-Reste sind z.B. geradkettige, verzweigte oder cyclische Reste mit 2 bis 20, vorzugsweise mit 2 bis 10 Kohlenstoff-Atomen, und besonders bevorzugt sind niedere Alkenyl-Reste mit 2 bis 6 Kohlenstoff-Atomen, wie z.B. Vinyl, Allyl oder 2-Butenyl.

Bevorzugte Aryl-Reste sind Phenyl, Biphenyl und Naphthyl.

Die Alkoxy-, Acyloxy-, Alkylcarbonyl-, Alkoxycarbonyl- und Amino-Reste leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, SO₃H und PO₄H₂.

Die nicht hydrolysierbaren Reste der Si-Verbindung IV beeinflussen die Eigenschaften der Precursor-Fäden, insbesondere werden diese stabilisiert. So bewirken z.B. (Meth)Acryl-Gruppen eine Quervernetzung und Aryl-Gruppen mindern die Sprödigkeit. Bei der anschließenden thermischen Behandlung der Precursor-Fäden wird die ganze "Organik" entfernt und somit haben diese Gruppen Einfluß auf die Gefügeausbildung (Porosität, Dichte) der resultierenden Faser.

Als weitere hydrolytisch kondensierbare Komponenten können dem Reaktionsmedium eine oder mehrere lösliche Titan- und/oder Zirkon-Verbindungen der folgenden Formel MX_{y}R_{z} zugesetzt werden, gegebenenfalls in vorkondensierter Form. M bedeutet Titan oder Zirkon, die Reste R und X sind gleich oder verschieden, y ist eine ganze Zahl von 1 bis 4, insbesondere 2 bis 4, z steht für 0, 1, 2 oder 3, vorzugsweise für 0, 1 oder 2, und X und R sind wie im Falle der Formel IV definiert. Hinsichtlich der näheren (bevorzugten) Definitionen dieser Reste kann auf die Ausführungen im Zusammenhang mit den geeigneten hydrolysierbaren Silicium-Verbindungen verwiesen werden. Die soeben genannten Gruppen können auch ganz oder teilweise durch Chelatliganden (z.B. Acetylaceton oder Acetessigsäureester, Essigsäure) ersetzt sein.

Bevorzugt handelt es sich bei den Ti- und Zr-Verbindungen um solche, in denen y gleich 4 ist. Es können auch komplexierte Ti- oder Zr-Verbindungen eingesetzt werden. Zusätzliche bevorzugte Komplexbildner sind hier Acrylsäure und Methacrylsäure. Konkrete Beispiele für einsetzbare Zr- und Ti-Verbindungen sind: TiCl₄, Ti(OC₂H₅)₄, Ti(OC₃H₇)₄, Ti(O-i-C₃H₇)₄, Ti(OC₄H₉)₄, Ti(2-ethylhexoxy)₄, Zr(OC₂H₅)₄, Zr(O-i-C₃H₇)₄, Zr(OC₃H₇)₄, Zr(OC₄H₉)₄, Zr(2-ethylhexoxy)₄, ZrCl₄ und ZrOCl₂.

Weitere hydrolysierbare Verbindungen, die zur Herstellung der erfindungsgemäßen Spinnmasse eingesetzt werden können, sind z.B. Bortrihalogenide und Borsäureester, wie z.B. BCl₃, B(OCH₃)₃ und B(OC₂H₅)₃.

Die nachfolgende Tabelle zeigt das Maß der Fadenbildung einiger erfindungsgemäßer Spinnlösungen. Die Fähigkeit zur Fadenbildung wurde mit drei Ausnahmen bei Raumtemperatur mittels des Glasstabziehversuchs getestet.

### Bewertung:

1 - optisch strukturfreier Endlosfaden, Länge ≥ 10 m
2 - oberflächenstrukturierter Endlosfaden, Länge ≥ 10 m
3 - Gelfaden, Länge ≥ 1 m
4 - Gelfaden, Länge ≥ 10 cm
5 - Gelfaden, Länge ≥ 1 cm

Die Spinnmassen J und N wurden bei 50 °C zu Fäden gezogen, die Spinnmasse O bei 100 °C.

| Stoffkomponenten | Stoffmengenanteile in Mol, Ansätze 0.05 Mol | | | | | | | | | | | | | |
|---|---|---|---|---|---|---|---|---|---|---|---|---|---|---|
| Al(OBu^{s})₃ | 1 | 1 | 1 | 1 | 1 | 1 | 1 | 1 | 1 | 1 | 1 | 1 | 1 | 1 |
| i-PrOEtOH | - | - | 1 | - | - | - | 1 | - | - | - | - | - | 1 | 1 |
| n-BuOEtOH | 1 | 1 | - | 1 | 1 | .5 | - | 1 | 1 | 1 | 1 | 1 | - | - |
| Propionsäure | 1 | - | - | - | - | - | - | - | - | - | 3.5 | 5 | 5 | 4 |
| Valeriansäure | - | 1 | - | - | - | - | - | - | - | - | - | - | - | - |
| Capronsäure | - | - | 1 | 1 | .5 | .5 | - | - | 4 | 5 | 1.5 | - | - | - |
| Caprylsäure | - | - | - | - | - | - | 1 | 1 | - | - | - | - | - | - |
| Spinnmasse | A | B | C | D | E | F | G | H | J | K | L | M | N | O |
| Bewertung | 5 | 5 | 5 | 4 | 5 | 5 | 5 | 4 | 1 | 1 | 1 | 2 | 3 | 1 |

Die folgende Tabelle enthält den Al₂O₃-Gehalt der verwendeten Spinnmassen

| | | | | | | | |
|---|---|---|---|---|---|---|---|
| Spinnmasse | A | B | C | D | E | F | G |
| Al₂O₃-Gehalt [%] | 11.6 | 10.9 | 10.9 | 10.6 | 12.0 | 14.0 | 10.3 |
| Spinnmasse | H | J | K | L | M | N | O |
| Al₂O₃-Gehalt [%] | 10.0 | 6.2 | 5.4 | 6.4 | 6.9 | 7.1 | 7.9 |

Um den Nachweis der Tauglichkeit der erfindungsgemäßen Spinnmasse für einen technischen Herstellungsprozess führen zu können, wurden Spinnversuche an einer Technikums-Trockenspinnanlage durchgeführt. Es handelte sich bei der Anlage um eine Kolben-Trockenspinneinrichtung mit beheizbarem Trockenschacht und einer bis zu 250 °C regelbaren Trägergasbeheizung. Der Spinnzylinder ist für kleine Volumina (1700 cm³) und einem maximalen Spinndruck von 10 MPa ausgelegt und läßt sich ebenfalls beheizen. Zur besseren Steuerung des Spinnvorgangs wurde nachträglich ein beheizbarer Düsenkopf installiert.

Die Spinnversuche wurden mit Massen der Zusammensetzung Al(OBu^{s})₃/i-PrOEtOH/Propionsäure im molaren Verhältnis von 1:1:5 durchgeführt. Diese Spinnmasse weist strukturviskoses Fließverhalten auf sowie eine starke Temperaturabhängigkeit der Viskosität. Damit wurden Spinnversuche in Abhängigkeit von Spinndruck und -temperatur durchgeführt. Es wurden bis zu 1000 m lange Monofilamente gezogen, wobei versucht wurde, jeweils die maximal bis zum Fadenriß erreichbare schwindigkeit einzustellen. Es wurden deutliche Abhängigkeiten zwischen Temperatur und Wickelgeschwindigkeit festgestellt. Die folgende Tabelle zeigt die maximalen schwindigkeiten bei 2 MPa und 3 MPa Spinndruck und bei verschiedenen Massetemperaturen.

| Thermostat-Temperatur | 45 °C | 55 °C | 65 °C | 75 °C |
|---|---|---|---|---|
| Wickelgeschwindigkeit bei 2 MPa Spinndruck | 10m/min | 20m/min | 60m/min | |
| Wickelgeschwindigkeit bei 3 MPa Spinndruck | | 25m/min | 100m/min | 200m/min |

Anhand von Ausführungsbeispielen wird das erfindungsgemäße Verfahren näher erläutert.

### Beispiel 1:

246.3 g (1.00 Mol) Aluminiumsekundärbutylat werden mit 104.1 g (1.00 Mol) Isopropoxyethanol versetzt. Nach einer Rührzeit von 30 min werden der Lösung 370.4 g (5.00 Mol) Propionsäure so langsam unter Rühren zugegeben, daß eine Temperatur von ≤ 25 °C eingehalten werden kann. Nach einer Stunde Rühren wird durch ein Glasrohr wasserdampfhaltige Luft bei einer konstant hohen Rührerdrehzahl (z.B. 400 U/min) eingeleitet. Etwa drei Tage später, wenn das Drehmoment des verwendeten Rührermotors einen Grenzwert erreicht, wird er abgeschaltet und die wasserklare, farblose Spinnmasse auf 50 °C erwärmt, sodaß die eingeschlossene Luft aufsteigen kann und eine blasenfreie Spinnmasse erhalten wird. Die Spinnmasse wird zur besseren Fließfähigkeit erwärmt (z.B. 50 °C), in eine konventionelle Spinnanlage gefüllt und mit einer Abzugsgeschwindigkeit von bis zu 200 m/min zu kilometerlangen Monofilamenten versponnen. Der Gelfaden wird anschließend gesintert und wandelt sich bei Temperaturen um 1120 °C in α-Al₂O₃-Fasern um. Die Spinnmasse ist über ein Jahr lagerstabil.

### Beispiel 2 :

246.3 g (1.00 Mol) Aluminiumsekundärbutylat werden mit 104.1 g (1.00 Mol) Isopropoxyethanol versetzt. Nach einer Rührzeit von 30 min werden der Lösung zunächst 222.2 g (3.00 Mol) Propionsäure so langsam unter Rühren zugegeben, daß eine Temperatur von ≤ 25 °C eingehalten werden kann. Danach werden noch 121.0 g (2.00 Mol) Essigsäure zugetropft. Nach einer Stunde Rühren wird durch ein Glasrohr wasserdampfhaltige Luft bei einer konstant hohen Rührerdrehzahl (z.B. 400 U/min) eingeleitet und wie in Beispiel 1 beschrieben weiterverfahren.

### Beispiel 3 :

246.3 g (1.00 Mol) Aluminiumsekundärbutylat werden mit 118.0 g (1.00 Mol) n-Butoxyethanol versetzt. Nach einer Rührzeit von 30 min werden der Lösung 580.8 g (5.0 Mol) Capronsäure so langsam unter intensivem Rühren zugegeben, daß eine Temperatur von ≤ 25 °C eingehalten werden kann. Der Ansatz wird analog zu Beispiel 1 weiterverarbeitet.

### Beispiel 4 :

246.3 g (1.00 Mol) Aluminiumsekundärbutylat werden mit 88.6 g (0.75 Mol) n-Butoxyethanol versetzt. Nach einer Rührzeit von 30 min werden der Lösung ein Gemisch aus 174.0 g (1.5 Mol) Capronsäure und 259.2 g (3.5 Mol) Propionsäure so langsam unter intensivem Rühren zugegeben, daß eine Temperatur von ≤ 25 °C eingehalten werden kann. Der Ansatz wird analog zu Beispiel 1 weiterverarbeitet.

### Beispiel 5 :

246.3 g (1.00 Mol) Aluminiumsekundärbutylat werden mit 118.0 g (1.00 Mol) n-Butoxyethanol versetzt. Nach einer Rührzeit von 30 min werden der Lösung ein Gemisch aus 348.4 g (3.0 Mol) Capronsäure und 120.0 g (2.0 Mol) Essigsäure so langsam unter intensivem Rühren zugegeben, daß eine Temperatur von ≤ 25 °C eingehalten werden kann. Der Ansatz wird analog zu Beispiel 1 weiterverarbeitet.

### Beispiel 6 :

246.3 g (1.00 Mol) Aluminiumsekundärbutylat werden mit 118.0 g (1.00 Mol) n-Butoxyethanol versetzt. Nach einer Rührzeit von 30 min werden 370.4 g (5.0 Mol) Propionsäure so langsam unter intensivem Rühren zugegeben, daß eine Temperatur von ≤ 25 °C eingehalten werden kann. Der Ansatz wird analog zu Beispiel 1 weiterverarbeitet.

### Beispiel 7 :

269.5 g (1.50 Mol) Aluminiumsekundärbutylat werden mit 156.2 g (1.00 Mol) Isopropoxyethanol versetzt. Nach einer Rührzeit von 30 min werden der Lösung 555.6 g (7.50 Mol) Propionsäure so langsam unter intensivem Rühren zugegeben, daß eine Temperatur von ≤ 25 °C eingehalten werden kann. Danach werden noch 208.3 g (1.00 Mol) Tetraethoxysilan zugetropft. Der Ansatz wird analog zu Beispiel 1 weiterverarbeitet. Es resultiert ein Gelfaden, der sich bei 980 °C zu reinem Mullit (3 Al₂O₃ * 2 SiO₂) umwandelt.

## Patentansprüche

1. Verfahren zur Herstellung von polykristallinen Fasern aus Aluminiumoxid oder aus Aluminiumoxid haltigen Mehrkomponentenoxiden durch Ziehen von Gelfäden aus einer viskosen Flüssigkeit und durch Trocknen und Sintern der Gelfäden mit folgenden Merkmalen:
· man setzt eine viskose Flüssigkeit ein, die eine oder mehrere partiell oder vollständig hydrolytisch kondensierte Verbindungen des Aluminiums und gegebenenfalls anderer Elemente aus der Gruppe Ca, Mg, B, Si, der Übergangsmetalle, der Lanthaniden und der Actiniden, und/oder von den oben genannten Verbindungen abgeleiteten Vorkondensaten enthält;
· man führt die hydrolytische Kondensation gegebenenfalls in Anwesenheit eines Katalysators und/oder eines Lösungsmittels durch Einwirken von Wasser oder Feuchtigkeit durch;
· man setzt partiell oder vollständig hydrolytisch kondensierte Verbindungen des Aluminiums ein, die sich von Aluminiumalkoholaten der Formel I
Al(OR*)₃ (I)
in der die Reste R* gleich oder verschieden sind und Propyl oder Butyl bedeuten,
und/oder von aus Aluminiumverbindungen in situ entstandenen Aluminiumalkoholaten der Formel I ableiten
- durch Umsetzung des Al(OR*)₃ mit 0.5 bis 2.5 Mol, bezogen auf 1 Mol Al(OR*)₃, eines Alkohols oder einer Mischung von Alkoholen der Formel II oder III,
R¹-X-R²-OH (II)
R¹-CX-R²-OH (III)
in der R¹ einen geradkettigen, verzweigten oder cyclischen Alkyl-Rest mit 1 bis 10 C-Atomen bedeutet, R² einen Alkylen-Rest mit 2 bis 4 C-Atomen darstellt, und X gleich O, S oder NR³ ist, mit R³ gleich Wasserstoff oder Alkyl mit 1 bis 4 C-Atomen,
- durch Komplexierung der resultierenden Aluminiumverbindungen mit 3 bis 7 Mol, bezogen auf ein Mol Al(OR*)₃, einer niedermolekularen Carbonsäure mit 1 bis 8 Kohlenstoffatomen, einer Mischung dieser niedermolekularen Carbonsäuren, oder der entsprechenden Anhydride,
- und durch hydrolytische Kondensation der komplexierten Aluminiumverbindungen.

2. Verfahren nach Anspruch 1, **dadurch gekennzeichnet,** daß man Aluminiumalkoholate einsetzt, bei denen R* s-Butyl oder i-Butyl bedeutet.

3. Verfahren nach Anspruch 1 oder 2, **dadurch gekennzeichnet,** daß man als Alkohole der Formel II oder III i-C₃H₇-O-C₂H₄-OH, n-C₄H₉-O-C₂H₄-OH, C₂H₅-NH-C₂H₄-OH, C₂H₅-S-C₂H₄-OH , CH₃-CO-CH₂-OH, CH₃-CO-CH(CH₃)-OH oder C₂H₅-CO-CH₂-OH einsetzt.

4. Verfahren nach einem oder mehreren der Ansprüche 1 bis 3, **dadurch gekennzeichnet,** daß man als niedermolekulare Carbonsäure Propion-, Valerian-, Capron- oder Caprylsäure einsetzt, oder ein Säuregemisch, welches Essigsäure enthält.

5. Verfahren nach einem oder mehreren der Ansprüche 1 bis 4, **dadurch gekennzeichnet,** daß man viskose Flüssigkeiten einsetzt, die als weitere partiell oder vollständig hydrolytisch kondensierte Verbindungen eine oder mehrere Verbindungen enthalten, die sich durch hydrolytische Kondensation von Silicium-Verbindungen der Formel IV ableiten,
Rₐ(R"Z)_{b}SiX_{4-(a+b)} (IV)
in der die Reste R, R" und Z gleich oder verschieden sind und folgende Bedeutung haben:
R = Alkyl, Alkenyl, Aryl, Alkylaryl oder Arylalkyl,
R" = Alkylen oder Alkenylen, wobei diese Reste durch Sauerstoff- oder Schwefelatome oder -NH-Gruppen unterbrochen sein können,
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
Z = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinyl-Gruppe,
a = 0, 1, 2, oder 3,
b = 0, 1, 2, oder 3, mit a+b = 1,2 oder 3.

6. Verfahren nach einem oder mehreren der Ansprüche 1 bis 5, **dadurch gekennzeichnet**, daß man viskose Flüssigkeiten einsetzt, die als weitere partiell oder vollständig hydrolytisch kondensierte Verbindungen eine oder mehrere Verbindungen enthalten, die sich durch hydrolytische Kondensation von im Reaktionsmedium löslichen Titan- oder Zirkon-Verbindungen der Formel
M X_{y} R_{z}
ableiten, in der M Titan oder Zirkon bedeutet, die Reste R und X gleich oder verschieden sind, y eine ganze Zahl von 1 bis 4 ist, insbesondere 2 bis 4, z für 0, 1, 2 oder 3 steht, vorzugsweise für 0, 1 oder 2, und X und R wie im Falle der Formel IV definiert sind.

7. Viskose, zur Herstellung von Gelfäden oder -fasern geeignete Flüssigkeit, bestehend aus einer oder mehreren partiell oder vollständig hydrolytisch kondensierten Verbindungen des Aluminiums und gegebenenfalls anderer Elemente aus der Gruppe Ca, Mg, B, Si, der Übergangsmetalle, der Lanthaniden und der Actiniden, und/oder von den oben genannten Verbindungen abgeleiteten Vorkondensaten, wobei die hydrolytische Kondensation gegebenenfalls in Anwesenheit eines Katalysators und/oder eines Lösungsmittels durch Einwirken von Wasser oder Feuchtigkeit durchgeführt wurde, **dadurch gekennzeichnet,** daß sich die partiell oder vollständig hydrolytisch kondensierten Verbindungen des Aluminiums von Alkoholaten der Formel I
Al(OR*)₃ (I)
in der die Reste R* gleich oder verschieden sind und Propyl oder Butyl bedeuten,
und/oder von aus Aluminiumverbindungen in situ entstandenen Aluminiumalkoholaten der Formel I ableiten
- durch Umsetzung des Al(OR*)₃ mit 0.5 bis 2.5 Mol, bezogen auf 1 Mol Al(OR*)₃, eines Alkohols oder einer Mischung von Alkoholen der Formel II oder III,
R¹-X-R²-OH (II)
R¹-CX-R²-OH (III)
in der R¹ einen geradkettigen, verzweigten oder cyclischen Alkyl-Rest mit 1 bis 10 C-Atomen bedeutet, R² einen Alkylen-Rest mit 2 bis 4 C-Atomen darstellt, und X gleich O, S oder NR³ ist, mit R³ gleich Wasserstoff oder Alkyl mit 1 bis 4 C-Atomen,
- durch Komplexierung der resultierenden Aluminiumverbindun gen mit 3 bis 7 Mol, bezogen auf ein Mol Al(OR*)₃, einer niedermolekularen Carbonsäure mit 1 bis 8 Kohlenstoffatomen, einer Mischung dieser niedermolekularen Carbonsäuren oder der entsprechenden Anhydride,
- und durch hydrolytische Kondensation der komplexierten Aluminiumverbindungen.

8. Viskose Lösung nach Anspruch 7, **dadurch gekennzeichnet,** daß R* in der Formel I s-Butyl oder i-Butyl bedeutet.

9. Viskose Lösung nach Anspruch 7 oder 8, **dadurch gekennzeichnet,** daß der Alkohol der Formel II oder III i-C₃H₇-O-C₂H₄-OH, n-C₄H₉-O-C₂H₄-OH, C₂H₅-NH-C₂H₄-OH, C₂H₅-S-C₂H₄-OH, CH₃-CO-CH₂-OH, CH₃-CO-CH(CH₃)-OH oder C₂H₅-CO-CH₂-OH ist.

10. Viskose Lösung nach einem oder mehreren der Ansprüche 7 bis 9, **dadurch gekennzeichnet,** daß die niedermolekulare Carbonsäure Propion-, Valerian-, Capron- oder Caprylsäure ist, oder ein Säuregemisch, welches Essigsäure enthält.

11. Viskose Lösung nach einem oder mehreren der Ansprüche 7 bis 10, **dadurch gekennzeichnet,** daß sie als weitere partiell oder vollständig hydrolytisch kondensierte Verbindungen eine oder mehrere Verbindungen enthält, die sich durch hydrolytische Kondensation von Silicium-Verbindungen der Formel IV, gegebenenfalls in vorkondensierter Form ableiten,
Rₐ(R"Z)_{b}SiX_{4-(a+b)} (IV)
in der die Reste R, R" und Z gleich oder verschieden sind und folgende Bedeutung haben:
R = Alkyl, Alkenyl, Aryl, Alkylaryl oder Arylalkyl,
R" = Alkylen oder Alkenylen, wobei diese Reste durch Sauerstoff- oder Schwefelatome oder -NH-Gruppen unterbrochen sein können,
X = Wasserstoff, Halogen, Hydroxy, Alkoxy, Acyloxy, Alkylcarbonyl, Alkoxycarbonyl oder NR'₂,
mit R' = Wasserstoff, Alkyl oder Aryl,
Z = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinyl-Gruppe,
a = 0, 1, 2, oder 3,
b = 0, 1, 2, oder 3, mit a+b = 1,2 oder 3.

12. Viskose Lösung nach einem oder mehreren der Ansprüche 7 bis 11, **dadurch gekennzeichnet,** daß sie als weitere partiell oder vollständig hydrolytisch kondensierte Verbindungen eine oder mehrere Verbindungen enthält, die sich durch hydrolytische Kondensation von im Reaktionsmedium löslichen Titan-oder Zirkon-Verbindungen, gegebenenfalls in vorkondensierter Form, der Formel
M X_{y} R_{z}
ableiten, in der M Titan oder Zirkon bedeutet, die Reste R und X gleich oder verschieden sind, y eine ganze Zahl von 1 bis 4 ist, insbesondere von 2 bis 4, z für 0, 1, 2 oder 3 steht, vorzugsweise für 0, 1 oder 2, und X und R wie im Falle der Formel IV definiert sind.

## Claims

1. A method of producing polycrystalline fibres from alumina or multi-component oxides containing alumina by drawing gel threads out of a viscous liquid and drying and sintering the gel threads, with the following features:
• a viscous liquid is prepared containing one or more partially or completely hydrolytically condensed compounds of aluminium and optionally other elements of the group Ca, Mg, B, Si, the transition metals, the lanthanides and the actinides, and/or pre-condensates derived from the abovementioned compounds;
• the hydrolytic condensation is carried out through the action of water or moisture optionally in the presence of a catalyst and/or a solvent;
• partially or completely hydrolytically condensed compounds of aluminium are used which derive from aluminium alcoholates of the formula I
Al(OR*)₃ (I)
in which the residues R* are the same or different and signify propyl or butyl,
and/or from aluminium alcoholates of the formula I resulting in situ from aluminium compounds
- by conversion of the Al(OR*)₃ with 0.5 to 2.5 mol, referred to 1 mol Al(OR*)₃, of an alcohol or a mixture of alcohols of the formula II or III,
R¹-X-R²-OH (II)
R¹-CX-R²-OH (III)
in which R¹ signifies a straight chain, branched or cyclic alkyl residue with 1 to 10 C atoms, R² signifies an alkylene residue with 2 to 4 C atoms and X is O, S or NR³, with R³ hydrogen or alkyl with 1 to 4 C atoms,
- by complexing the resulting aluminium compounds with 3 to 7 mol, referred to one mol Al(OR*)₃, of a low molecular carboxylic acid with 1 to 8 carbon atoms, a mixture of these low molecular carboxylic acids or the corresponding anhydrides,
- and by hydrolytic condensation of the complexed aluminium compounds.

2. A method according to claim 1, in which aluminium alcoholates are used in which R* signifies s-butyl or i-butyl.

3. A method according to claim 1 or 2, characterized in that i-C₃H₇-O-C₂H₄-OH, n-C₄H₉-O-C₂H₄-OH, C₂H₅-NH-C₂H₄-OH, C₂H₅-S-C₂H₄-OH, CH₃-CO-CH₂-OH, CH₃-CO-CH(CH₃)-OH or C₂H₅-CO-CH₂-OH are used as alcohols of the formula II or III.

4. A method according to one or more of claims 1 to 3, characterized in that propionic, valeric, caproic or caprylic acid is used as a low molecular carboxylic acid, or an acid mixture containing acetic acid.

5. A method according to one or more of claims 1 to 4, characterized in that viscous liquids are used which contain as further partially or completely hydrolytically condensed compounds one or more compounds which are derived by hydrolytic condensation of silicon compounds of the formula IV,
Rₐ(R"X)_{b}SiX_{4-(a+b)} (IV)
in which the residues R, R" and Z are the same or different and have the following meanings:
R = alkyl, alkenyl, aryl, alkylaryl or arylalkyl,
R" = alkyls or alkyenyls, wherein these residues can be interrupted by oxygen or sulphur atoms or -NH- groups,
X = hydrogen, halogen, hydroxy, alkoxy, acyloxy, alkylcarbonyl, alkoxycarbonyl or NR'₂,
with R' = hydrogen, alkyl or aryl,
Z = halogen or an optionally substituted amino, amide, aldehyde, alkylcarbonyl, carboxy, mercapto, cyano, alkoxy, alkoxycarbonyl, sulphonic acid, phosphoric acid, acryloxy, methecrylyoxy, epoxy or vinyl group,
a = 0, 1, 2 or 3,
b = 0, 1, 2 or 3, with a+b = 1, 2 or 3.

6. A method according to one or more of claims 1 to 5, characterized in that viscous liquids are used which contain as further partially or completely hydrolytically condensed compounds one or more compounds which are derived by hydrolytic condensaion of titanium or zirconium compounds soluble in the reaction medium with the formula
M X_{y} R_{z}
in which M signifies titanium or zirconium, the residues R and X are the same or different, y is whole number from 1 to 4, especially from 2 to 4, z stands for 0, 1, 2 or 3, preferably for 0, 1 or 2, and X and R are as defined for the case of the formula IV.

7. A viscous liquid suitable for producing gel threads or fibres, consisting of one or more partially or completely hydrolytically condensed compounds of aluminium and optionally other elements of the group Ca, Mg, B, Si, the transition metals, the lanthanides and the actinides, and/or pre-condensates derived from the abovementioned compounds, wherein the hydrolytic condensation is carried out through the action of water or moisture optionally in the presence of a catalyst and/or a solvent, characterized in that the partially or completely hydrolytically condensed compounds of aluminium are derived from alcoholates of the formula I
Al(OR*)₃ (I)
in which the residues R* are the same or different and signify propyl or butyl,
and/or from aluminium alcoholates of the formula I resulting in situ from aluminium compounds
- by conversion of the Al(OR*)₃ with 0.5 to 2.5 mol, referred to 1 mol Al(OR*)₃, of an alcohol or a mixture of alcohols of the formula II or III,
R¹-X-R²-OH (II)
R¹-CX-R²-OH (III)
in which R¹ signifies a straight chain, branched or cyclic alkyl residue with 1 to 10 C atoms, R² signifies an alkylene residue with 2 to 4 C atoms and X is O, S or NR³, with R³ hydrogen or alkyl with 1 to 4 C atoms,
- by complexing the resulting aluminium compounds with 3 to 7 mol, referred to one mol Al(OR*)₃, of a low molecular carboxylic acid with 1 to 8 carbon atoms, a mixture of these low molecular carboxylic acids or the corresponding anhydrides,
- and by hydrolytic condensation of the complexed aluminium compounds.

8. A viscous solution according to claim 7, characterized in that R* signifies s-butyl or i-butyl in the formula I.

9. A viscous solution according to claim 7 or 8, characterized in that the alcohol of formula II or II is i-C₃H₇-O-C₂H₄-OH, n-C₄H₉-O-C₂H₄-OH, C₂H₅₋NH-C₂H₄-OH, C₂H₅-S-C₂H₄-OH, CH₃-CO-CH₂-OH, CH₃-CO-CH(CH₃)-OH or C₂H₅-CO-CH₂OOH.

10. A viscous solution according to one or more of claims 7 to 9, characterized in that the low molecular carboxylic acid is propionic, valeric, caproic or caprylic acid or an acid mixture containing acetic acid.

11. A viscous solution according to one or more of claims 7 to 10, characterized in that it contains as further partially or completely hydrolytically condensed compounds one or more compounds which are derived by hydrolytic condensation of silicon compounds of the formula IV, optionally in pre-condensed form,
Rₐ(R"X)_{b}SiX_{4-(a+b)} (IV)
in which the residues R, R" and Z are the same or different and have the following meanings:
R = alkyl, alkenyl, aryl, alkylaryl or arylalkyl,
R" = alkyls or alkenyls, wherein these residues can be interrupted by oxygen or sulphur atoms or -NH- groups,
X = hydrogen, halogen, hydroxy, alkoxy, acyloxy, alkylcarbonyl, alkoxycarbonyl or NR'₂,
with R' = hydrogen, alkyl or aryl,
Z = halogen or an optionally substituted amino, amide, aldehyde, alkylcarbonyl, carboxy, mercapto, cyano, alkoxy, alkoxycarbonyl, sulphonic acid, phosphoric acid, acryloxy, methecrylyoxy, epoxy or vinyl group,
a = 0, 1, 2 or 3,
b = 0, 1, 2 or 3, with a+b = 1, 2 or 3.

12. A viscous solution according to one or more of claims 7 to 11, characterized in that it contains as further partially or completely hydrolytically condensed compounds one or more compounds which are derived by hydrolytic condensaion of titanium or zirconium compounds soluble in the reaction medium, optionally in pre-condensed form, with the formula
M X_{y} R_{z}
in which M signifies titanium or zirconium, the residues R and X are the same or different, y is whole number from 1 to 4, especially from 2 to 4, z stands for 0, 1, 2 or 3, preferably for 0, 1 or 2, and X and R are as defined for the case of the formula IV.

## Revendications

1. Procédé de fabrication de fibres polycristallines en oxyde d'aluminium ou en oxydes à plusieurs composants contenant de l'oxyde d'aluminium par étirage de fils de gel en un fluide viscose et par séchage et frittage des fils de gel avec les caractéristiques suivantes :
- on met en oeuvre un fluide viscose qui renferme des composés partiellement ou complètement condensés hydrolytiquement de l'aluminium et le cas échéant d'autres éléments choisis dans le groupe du Ca, B, Si, des métaux de transition, des lanthamides et des actinides, et/ou des précondensats dérivés des composés cités ci-dessus ;
- on met en oeuvre la condensation hydrolytique le cas échéant en présence d'un catalyseur, et/ou d'un solvant, par action de l'eau ou de l'humidité ;
- on met en oeuvre des composés de l'aluminium partiellement ou complètement condensés hydrolytiquement qui dérivent des alcoolats d'aluminium de formule I
Al(OR*)₃ (I)
dans laquelle les radicaux R* sont identiques ou différents et signifient un propyle ou un butyle
et/ou d'alcoolats d'aluminium de formule I formés in situ à partir de composés d'aluminium ;
- par mise en réaction de Al(OR*)₃ avec 0,5 à 2,5 mol rapporté à 1 mol Al(OR*)₃ d'un alcool ou d'un mélange d'alcool de formule II ou III
R¹-X-R²-OH (II)
R¹-CX-R²-OH (III)
dans lesquelles R¹ signifie un radical alkyle à chaîne droite, ramifié ou cyclique ayant de 1 à 10 atomes de carbone,
R² représente un radical alkylène ayant de 2 à 4 atomes de carbone
et X est égal à 0, S ou NR³, avec R³ égal à de l'hydrogène ou un alkyle avec 1 à 4 atomes de carbone ;
- par complexation des composés d'aluminium résultant avec 3 à 7 mol rapporté à une mol Al(OR*)₃ d'un acide carboxylique à bas poids moléculaire ayant de 1 à 8 atomes de carbone, un mélange de ces acides carboxyliques à bas poids moléculaire ou des anhydrides correspondants,
et par condensation hydrolytique des composés de l'aluminium complexés.

2. Procédé selon la revendication 1,
caractérisé en ce qu'
on met en oeuvre des alcoolats d'aluminium pour lesquels R* signifie un s-butyle ou un i-butyle.

3. Procédé selon la revendication 1 ou la revendication 2,
caractérisé en ce qu'
on met en oeuvre comme alcool de formule II ou de formule III, i-C₃H₇-O-C₂H₄-OH, n-C₄H₉-O-C₂R₄-OH, C₂H₅-NH-C₂H₄-OH, C₂H₅-S-C₂H₄-OH, CH₃-CO-CH₂-OH, CH₃-CO-CH(CH₃)-OH ou C₂H₅-CO-CH₂-OH.

4. Procédé selon l'une ou plusieurs des revendications 1 à 3,
caractérisé en ce qu'
on met en oeuvre comme acide carboxylique à bas poids moléculaire, de l'acide propionique, de l'acide valerianique, de l'acide caproïque ou de l'acide caprylique ou un mélange d'acides qui renferme de l'acide acétique.

5. Procédé selon l'une ou plusieurs des revendications 1 à 4,
caractérisé en ce qu'
on met en oeuvre des fluides viscose qui renferment comme autres composés partiellement ou complètement condensés hydrolytiquement, un ou plusieurs composés qui dérivent par condensation hydrolytique des composés du silicium de formule IV,
Rₐ(R''Z)_{b}SiX_{4-(a+b)} (IV)
dans laquelle les radicaux R, R" et Z sont identiques ou différents, et ont la signification suivante :
R = alkyle, alkenyle, aryle, alkylaryle ou arylalkyle ;
R" = alkylène ou alkenylène dans lesquels ces radicaux peuvent être interrompus par des atomes d'oxygène ou de soufre ou par des groupes -NH- ;
X = hydrogène, halogène, hydroxy, alkoxy, acyloxy, alkyl-carbonyle, alkoxycarbonyle ou NR avec
R' = hydrogène, alkyle ou aryle ;
Z = halogène, ou un groupe amine, éventuellement substitué, amide, aldéhyde, alkylcarbonyle, carboxy, mercapto, cyano-alkoxy, alkoxycarbonyle, acide sulfonique, acide phosphorique, acryloxy, methacryloxy, époxy ou groupe vinyle ;
a = 0, 1, 2 ou 3
b = 0, 1, 2 ou 3 avec a+b = 0, 1, 2 ou 3.

6. Procédé selon l'une ou plusieurs des revendications 1 à 5,
caractérisé en ce qu'
on met en oeuvre des fluides viscose qui renferment comme autres composés partiellement ou complètement hydrolytiquement condensés, un ou plusieurs composés qui dérivent par condensation hydrolytique de composés du titane ou du zirconium solubles dans le milieu réactionnel de formule :
M X_{Y} R_{Z}
dans laquelle M signifie le titane ou le zirconium, les radicaux R et X sont identiques ou différents, y est un nombre entier allant de 1 à 4, en particulier de 2 à 4, z représente 0, 1, 2 ou 3, de préférence 0, 1 ou 2, et X et R sont définis comme dans le cas de la formule IV.

7. Viscose appropriée pour la fabrication de fils de gels ou de fibres de gel formé d'un ou plusieurs composés partiellement ou complètement hydrolytiquement condensés de l'aluminium et le cas échéant d'autres éléments choisis dans le groupe du Ca, Mg, B, Si, des métaux de transition, des lanthanides, et des actinides, et/ou des pré-condensats dérivés des composés cités ci-dessus, dans lequel la condensation hydrolytique a été effectuée le cas échéant en présence d'un catalyseur et/ou d'un solvant par action de l'eau ou de l'humidité,
caractérisé en ce que
les composés de l'aluminium partiellement ou complètement hydrolytiquement condensés dérivent d'alcoolats de formule
I Al(OR*)₃ (I)
dans laquelle les radicaux R* sont identique ou différents et signifient le propyle ou le butyle et/ou d'alcoolates d'aluminium de formule I formés « in situ » à partir de composés d'aluminium :
- par mise en réaction de Al(OR*)₃ avec 0,5 à 2,5 mol rapporté à 1 mol Al(OR*)₃, d'un alcool ou un mélange d'alcools de formule II ou de formule III
R¹-X-R²-OH (II)
R¹-CX-R²-OH (III)
dans laquelle R' signifie un radical alkyle à chaîne droite, ramifié ou cyclique ayant de 1 à 10 atomes de carbone, R² représente un radical alcoylène ayant de 2 à 4 atomes de carbone et X est égal à 0, S ou NR³, avec R³ égal à un hydrogène ou un alkyle ayant de 1 à 4 atomes de carbones,
- par complexation des composés d'aluminium résultants ayant de 3 à 7 mol rapporté à une mol d'Al(OR*)₃ d'un acide carboxylique à bas poids moléculaire ayant de 1 à 8 atomes de carbone, d'un mélange de ces acides carboxyliques à bas poids moléculaire ou des anhydrides correspondants,
et par condensation hydrolytique des composés d'aluminium complexés.

8. Solution de viscose selon la revendication 7,
caractérisée en ce que
R* signifie dans la formule I le s-butyle ou i-butyle.

9. Solution de viscose selon la revendication 7 ou la revendication 8
caractérisé en ce que
l'alcool de formule II ou de formule III est i-C₃H₇-O-C₂H₄-OH, n-C₄H₉-O-C₂H₄-OH, C₂H₅-NH-C₂H₄-OH, C₂H₅-S-C₂H₄-OH, CH₃-CO-CH₂-OH, CH₃-CO-CH(CH₃)-OH ou C₂H₅-CO-CH₂-OH.

10. Solution de viscose selon l'une ou plusieurs des revendications 7 à 9,
caractérisée en ce que
les acides carboxyliques à bas poids moléculaire est l'acide propionique, l'acide valérianique, l'acide caproïque ou l'acide caprylique ou un mélange d'acides qui renferme de l'acide acétique.

11. Solution de viscose selon l'une ou plusieurs des revendications 7 à 10,
caractérisée en ce qu'
elle renferme comme autres composés partiellement ou complètement hydrolytiquement condensés, un ou plusieurs composés qui dérivent par condensation hydrolytique de composés du silicium de formule IV, le cas échéant sous forme pré-condensée
Rₐ(R"Z)_{b}SiX_{4-(a+b)} (IV)
dans laquelle les radicaux R, R'' et Z sont identiques ou différents et ont la signification suivante :
R = alkyle, alkenyle, aryle, alkylaryle ou arylalkyle ;
R" = alkylène ou alkenylène dans lesquels ces radicaux peuvent être interrompus par des atomes d'oxygène ou de soufre ou par des groupes -NH- ;
X = hydrogène, halogène, hydroxy, alcoxy, acyloxy, alkyl-carbonyle, alcoxycarbonyle ou un groupe NR avec
Z = halogène, ou un groupe amino, éventuellement substitué, amide, aldéhyde, alkylcarbonyle, carboxy, mercapto, cyano-alkoxy, alkoxycarbonyle, acide sulfonique, acide phosphorique, acryloxy, methacryloxy, époxy ou groupe vinyle ;
a = 0, 1, 2 ou 3
b = 0, 1, 2 ou 3 avec a+b = 0, 1, 2 ou 3.

12. Solution de viscose selon l'une ou plusieurs des revendications 7 à 11,
caractérisée en ce qu'
elle contient comme autres composés partiellement ou complètement hydrolytiquement condensés un ou plusieurs composés qui dérivent par condensation hydrolytique de composés du titane ou du zirconium solubles dans le milieu réactionnel le cas échéant sous forme pré-condensée, de formule
M X_{Y} R_{Z}
dans laquelle M signifie le titane ou le zirconium, les radicaux R et X sont identiques ou différents, y est un nombre entier allant de 1 à 4, en particulier de 2 à 4, z représente 0, 1, 2 ou 3, de préférence 0, 1 ou 2, et X et R sont définis comme dans le cas de la formule IV.
